# EUROPÄISCHE PATENTSCHRIFT

(11) **EP 3 926 022 B1**
(45) Veröffentlichungstag und Bekanntmachung des Hinweises auf die Patenterteilung: **22.10.2025**
(21) Anmeldenummer: 20180863.1
(22) Anmeldetag: 18.06.2020
(51) Int. Cl.: C09K 11/65, G01N 21/27, C09K 11/02, G01N 21/64

(54) **VERWENDUNG EINES KALIBRIERUNGSTARGETS**
USE OF A CALIBRATION TARGET
UTILISATION D'UNE CIBLE D'ÉTALONNAGE

(43) Veröffentlichungstag der Anmeldung: 22.12.2021
(73) Patentinhaber: IMT Masken und Teilungen AG, 8606 Greifensee (CH)
(72) Erfinder: THORWARTH, Götz, 8315 Lindau (CH)
(74) Vertreter: Pleyer, Hans Anno

(56) Entgegenhaltungen:
- CN-A- 104 596 994
- DE-U1- 20 104 446
- US-A1- 2007 190 566
- US-A1- 2008 038 835
- US-A1- 2010 323 178
- US-A1- 2013 126 757
- JINGZHI SHANG ET AL: "The Origin of Fluorescence from Graphene Oxide", SCIENTIFIC REPORTS, vol. 2, no. 1, 9 November 2012 (2012-11-09), XP055743992, DOI: 10.1038/srep00792
- BOB JIN KWON ET AL: "Highly transparent and conducting graphene-embedded ZnO films with enhanced photoluminescence fabricated by aerosol synthesis", NANOTECHNOLOGY, INSTITUTE OF PHYSICS PUBLISHING, BRISTOL, GB, vol. 25, no. 8, 4 February 2014 (2014-02-04), pages 85701, XP020257736, ISSN: 0957-4484, [retrieved on 20140204], DOI: 10.1088/0957-4484/25/8/085701
- YU XIAYANG ET AL: "Sol-gel derived Al-doped zinc oxide - Reduced graphene oxide nanocomposite thin films", JOURNAL OF ALLOYS AND COMPOUNDS, ELSEVIER SEQUOIA, LAUSANNE, CH, vol. 699, 27 December 2016 (2016-12-27), pages 79 - 86, XP029906088, ISSN: 0925-8388, DOI: 10.1016/J.JALLCOM.2016.12.326

## Beschreibung

### GEBIET DER TECHNIK

Die vorliegende Erfindung bezieht sich auf ein Kalibrierungstarget und dessen Verwendung zum Kalibrieren einer optoelektronischen Vorrichtung zur Analyse von Biomolekülen durch Detektion von Fluoreszenzsignalen aus einer Probe.

### STAND DER TECHNIK

Im Bereich der medizinischen Diagnostik oder auch in der Biotechnologie sind Anlagen zur Analyse von Biomolekülen durch Detektion von Fluoreszenzsignalen aus einer Probe ein wichtiges Werkzeug. Solche Anlagen enthalten optische Detektoren, mit denen von einer Probe abgestrahltes Licht detektiert wird. Ein Anwendungsbeispiel für solche Anlagen ist die Gensequenzierung.

Hierzu werden beispielsweise die vier in der DNA auftretenden Basen Adenin (A), Guanin (G), Cytosin (C) und Thymin (T) mit für die jeweiligen Basen spezifischen fluoreszierenden Farbstoffen markiert. Regt man die so behandelte Probe mit Laserlicht an, strahlen diese Farbstoffe unterschiedliche Wellenlängen ab, die den jeweiligen Basen zugeordnet werden können. Detektiert man die Intensität dieser Abstrahlung aufgelöst nach dem Ort und der jeweiligen Wellenlänge, so lassen sich Aussagen bis hin zum genauen Aufbau einer DNA treffen.

Hierzu ist es aber von entscheidender Bedeutung, die optischen Detektoren zu Kalibrieren, also mit Licht einer bekannten Frequenz und mit bekannter Intensität zu beaufschlagen, um das Detektorsignal auf einen Referenzwert einstellen zu können. Diese Kalibrierung kann gelegentlich, im Servicefall oder auch vor jeder Verwendung der Anlage notwendig sein, um Ergebnisse mit der notwendigen Genauigkeit zu erzielen.

Üblicherweise kommt zur Kalibrierung anstelle einer zu untersuchenden Probe ein Kalibrierungstarget zum Einsatz, das entweder fest in der jeweiligen Anlage eingebaut ist oder das zum Zwecke der Kalibrierung in die Anlage eingebracht wird.

Als Kalibrierungstarget kommt oft ein Modul zum Einsatz, wie es in der jeweiligen Anlage auch für den eigentlichen Messvorgang verwendet wird. Diese Module verfügen über Kanäle und Reservoire, durch die die zu untersuchenden Proben gepumpt werden. Befüllt man diese mit einer bekannten Mischung der auch zur Messung verwendeten Farbstoffe, erhält man bei Anregung mit Laserlicht mit einer oder mehreren Anregungswellenlängen definierte Signale von unterschiedlichen Fluoreszenzwellenlängen in den Detektoren.

Ein Nachteil dieser Kalibrierungstargets ist die geringe Standzeit der Farbstoffe. Diese können durch die Bestrahlung mit Laserlicht ausbleichen oder auf andere Weise degenerieren und somit nach einiger Zeit weniger Lichtintensität abstrahlen. Zu Kalibrierzwecken sind sie dann unbrauchbar. Als Gegenmaßnahme ist es bekannt, durch eine stete Bewegung der Farbstoffmischung in den Kanälen (etwa durch Brown'sche Molekularbewegung oder durch Pumpen) für einen Austausch der gealterten Farbstoffe zu sorgen. Dies ist jedoch ein relativ aufwändiges Verfahren, um ein stabiles Kalibrierungstarget zu erhalten.

In der WO 2017084998 A1 ist zur Vermeidung der Degradation der Farbstoffe ein Kalibrierungstarget beschrieben, das auf einem fluoreszierenden, nanokristallinen Feststoff beruht. Es werden in diesem Zusammenhang Metallsulfide als geeignete Feststoffe genannt. Wegen der relativ schmalbandigen Abstrahlung dieser Nanokristalle sind aber vier verschiedene Materialien notwendig, um die zu kalibrierenden Wellenlängen abzudecken. Solche Nanopartikel weisen außerdem oft einen relativ großen Stokes-Shift auf, so dass Detektoren, die in der Nähe der Anregungswellenlänge empfindlich sein müssen, nicht kalibriert werden können.

Die Dokumente US 2008/038835 A1, US 2007/190566 A1, DE 2010446 U1 und US 2013/126757 A1 offenbaren weitere Kalibrierungstargets, die auf einem fluoreszierenden Feststoff beruhen.

Das Dokument US 2010/323178 A1 beschreibt eine transparente, leitfähige Schicht, die auf einer Matrix mit eingebettetem Graphen beruht. Diese Schicht wird zur Herstellung von Sensoren verwendet, beruhend auf der elektrischen Leitfähigkeit von Graphen.

Das Dokument CN 104 596 994 A beschreibt einen dotierten Titandioxid/ Graphenoxid-Verbundfilm und ein Verfahren zu seiner Herstellung, sowie die Verwendung für die semiquantitative In-Situ-Charakterisierung der Proteinadsorptionsmenge auf der Filmoberfläche, die In-vitro-Zellkultur und das Tissue Engineering.

### ZUSAMMENFASSUNG DER ERFINDUNG

Es ist daher Aufgabe der Erfindung, die Verwendung eines verbesserten Kalibrierungstargets zum Kalibrieren einer optoelektronischen Vorrichtung zur Analyse von Biomolekülen anzugeben.

Diese Aufgabe wird gelöst durch eine Verwendung eines Kalibrierungstargets gemäß Anspruch 1. Vorteilhafte Details ergeben sich auch aus den von Anspruch 1 abhängigen Ansprüchen.

Es wird die Verwendung eines Kalibrierungstargets zum Kalibrieren einer optoelektronischen Vorrichtung zur Analyse von Biomolekülen durch Detektion von Fluoreszenzsignalen aus einer Probe offenbart, mit einer auf einem Substrat angeordneten, durch Laserlicht anregbaren, festen Fluoreszenzschicht. Die Fluoreszenzschicht umfasst eine optisch inaktive, transparente Matrix mit einem Brechungsindex größer als 2 mit einer auf Kohlenstoff basierten und zur Lichtemission anregbaren Komponente. Bei der Komponente handelt es sich um Graphen, Graphenoxid, oder reduziertes Graphenoxid.

Es hat sich gezeigt, dass ein auf diese Weise aufgebautes Kalibrierungstarget besonders langzeitstabil ist, auch wenn es mit hohen Laserleistungen zur Emission von Licht angeregt wird. So ein Kalibrierungstarget lässt sich fest in einer Anlage verbauen und bei Bedarf zum Kalibrieren verwenden.

Für die transparente Matrix und die zur Lichtemission anregbaren Komponente lassen sich Materialien finden, die eine gute Einkopplung des Anregungslichtes und eine breitbandige Fluoreszenz gewährleisten, so dass Detektoren für mehrere verschiedene Wellenlängen kalibriert werden können.

Weitere Vorteile und Einzelheiten der vorliegenden Erfindung ergeben sich aus der nachfolgenden Beschreibung verschiedener Ausführungsformen anhand der Figuren. Die Erfindung wird dabei anhand der Gensequenzierung erklärt und beschrieben, das erfindungsgemäße Kalibrierungstarget eignet sich aber für andere Arten von optoelektronischen Vorrichtungen zur Analyse von Biomolekülen durch Detektion von Fluoreszenzsignalen aus einer Probe, wie beispielsweise automatisierte Fluoreszenz-Messmikroskope, mit denen die virale Verteilung in Gewebe, Stoffwechselprozesse oder Protein-Interaktionen untersucht werden können.

### KURZE BESCHREIBUNG DER ZEICHNUNGEN

Dabei zeigt
- Figur 1: ein Emissionsspektrum aus der Gensequenzierung,
- Figur 2: ein erstes Ausführungsbeispiel des Kalibrierungstargets,
- Figur 3: ein zweites Ausführungsbeispiel des Kalibrierungstargets,
- Figur 4: ein drittes Ausführungsbeispiel des Kalibrierungstargets.

### BESCHREIBUNG DER AUSFÜHRUNGSFORMEN

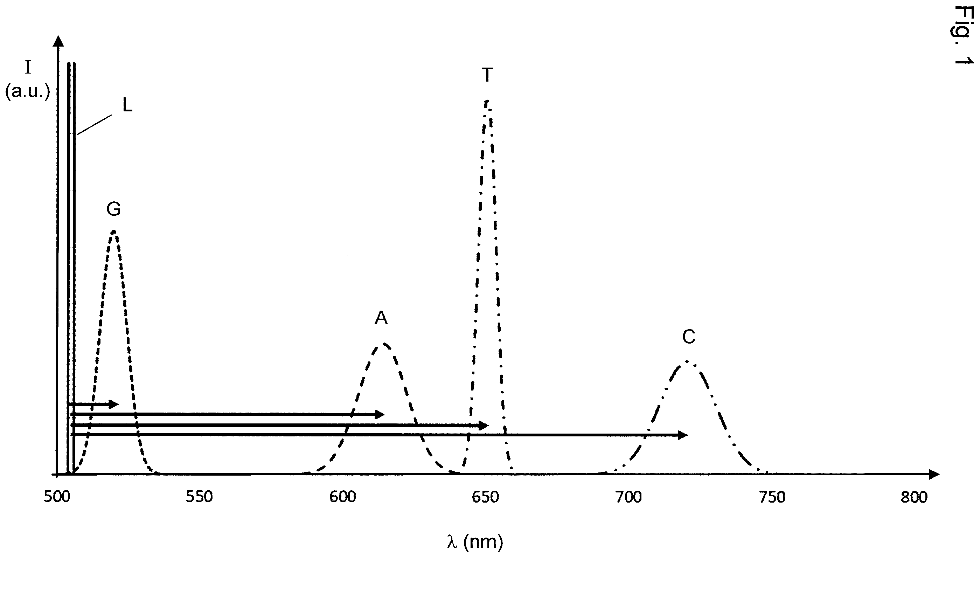

Die Figur 1 zeigt schematisch das Emissionsspektrum, wie es beim Sequenzieren von DNA auftreten kann. Die Intensität I des Lichts ist in beliebigen Einheiten gegen die Wellenlänge λ des Lichts aufgetragen.

Regt man die zu untersuchende Probe mit Laserlicht L einer Wellenlänge von ca. 510nm an, so senden die zur Markierung der vier in der DNA vorkommenden Basen verwendeten Farbstoffe Licht unterschiedlicher Wellenlänge aus. Diese auf Fluoreszenz beruhende Emission von Licht erfolgt bei unterschiedlichen Wellenlängen, die für die jeweiligen Basen spezifisch sind. Die vier Emissionspeaks sind daher mit dem Namen der jeweiligen Basen, also mit G, A, T und C bezeichnet. Zur Detektion dieser Peaks G, A, T, C werden beispielsweise Photodetektoren mit entsprechenden Farbfiltern verwendet.

Um diese Detektoren zu kalibrieren, wird ein Kalibrierungstarget verwendet, das anstelle eines Probenträgers in die Anlage zur Gensequenzierung eingebracht wird.

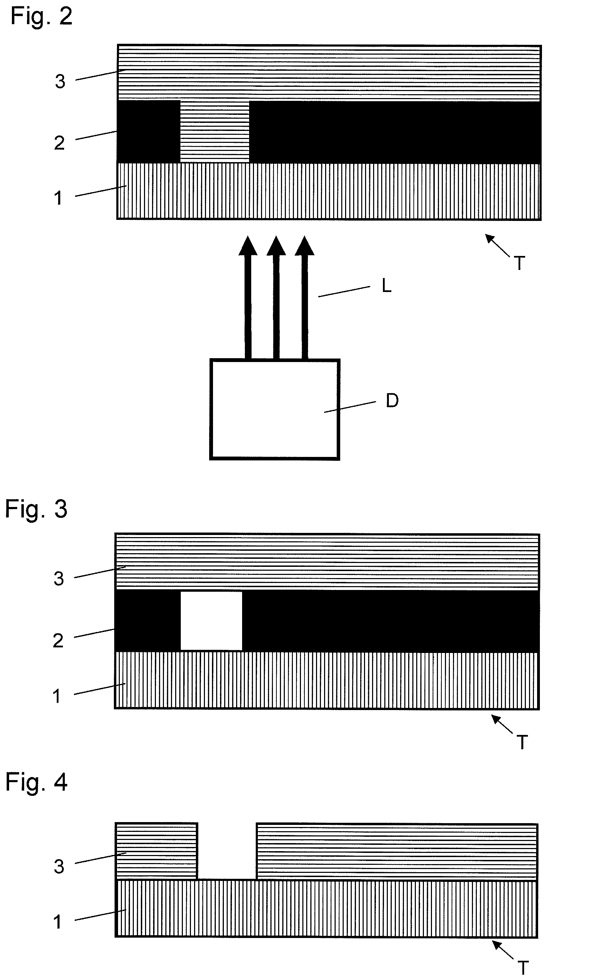

Ein solches Kalibrierungstarget T ist in der Figur 2 dargestellt. Auf einem transparenten Substrat 1 aus Glas ist eine opaque Schicht 2 aus Chrom angeordnet, die an einigen Stellen unterbrochen ist. Anstelle von Chrom können hier auch andere opaque Materialien verwendet werden, wie beispielsweise Aluminium, Tantal, Molybdän oder Wolfram. Dadurch entsteht eine Referenzstruktur (z.B. Punkte, Linien, Kreuze, etc.), die in einem Detektor D zur Auswertung der Position des Kalibrierungstargets T oder auch zum Fokussieren der Optik herangezogen werden kann, etwa indem die Kanten der Referenzstruktur analysiert werden.

Das Kalibrierungstarget T weist außerdem eine Fluoreszenzschicht 3 auf, die auf der Chromschicht 2 aufgebracht ist, so dass auch die Öffnungen der Chromschicht 2 mit dem fluoreszierenden Material gefüllt sind.

Eine optoelektronische Auswerteeinheit enthält eine Quelle für Laserlicht L und einen oder mehrere Fotodetektoren D zum Erfassen des von der Fluoreszenzschicht 3 emittierten Lichtes.

Das in der Figur 3 gezeigte zweite Ausführungsbeispiel für ein Kalibrierungstarget T stellt eine leichte Abwandlung des ersten Ausführungsbeispiels dar. Hier ist die Fluoreszenzschicht 3 so aufgebracht, dass die Öffnungen in der Chromschicht 2 nicht mit fluoreszierendem Material gefüllt sind. Das Anregungslicht L erreicht die Fluoreszenzschicht 3 dennoch.

Gemäß dem in der Figur 4 gezeigten dritten Ausführungsbeispiel kann auf die opaque Chromschicht 3 auch verzichtet werden, wenn die fluoreszierende Schicht 3 selbst strukturiert ist, so dass im Detektor D helle und dunkle Bereiche als Referenzstruktur ausgewertet werden können.

In allen drei Ausführungsbeispielen kommt eine Fluoreszenzschicht 3 zum Einsatz, die bei Anregung mit Laserlicht L ein breitbandiges Fluoreszenzlicht aussendet, so dass alle im Detektor D zu erfassenden Wellenlängen abgedeckt sind. Damit lassen sich die spektralen Empfindlichkeiten dieser Detektoren D kalibrieren.

Die Fluoreszenzschicht 3 ist zur Vermeidung der Degeneration bei Anregung mit hoher Laserleistung vorzugsweise anorganisch ausgeführt. So kann TiO2 oder Ta2O5 als transparente, nicht-lumineszente Matrix mit eingebettetem Graphenoxid verwendet werden. Graphenoxid ist ein anorganisches, lumineszentes bzw. fluoreszentes Material.

Zur Maximierung der Wechselwirkung des eingestrahlten Laserlichts L mit dem fluoreszierenden Medium in der Matrix wird die Matrix aus einem hochbrechenden (etwa n > 2) Material mit kolloidaler Struktur gewählt, so z.B. TiO2 oder Ta2O5, das mit einem Sol-Gel-Prozess gewonnen wurde.

Das fluoreszierende Material soll entsprechend den organischen Farbstoffen einen geringen Stokes-Shift sowie eine möglichst breitbandige Emission aufweisen, um alle Detektionskanäle anzusprechen. Weiterhin muss es bei verhältnismäßig langen Wellenlängen, z.B. 532nm, Fluoreszenz zeigen. All diese Anforderungen erfüllt Graphenoxid besonders gut. Es eignen sich aber allgemeiner auch andere auf Kohlenstoff basierte Materialien wie Graphen oder reduziertes Graphenoxid.

Eine sinnvolle Zusammensetzung der fluoreszierenden Schicht 3 beruht auf einem Anteil des fluoreszierenden Materials an der gesamten Schicht 3 von 1 bis 50 Gewichtsprozent, bevorzugt 5 bis 20 Gewichtsprozent.

Die Dicke des Glassubstrats 1 (anstelle von Glas kann auch ein anderer transparenter Träger verwendet werden) liegt typisch im Bereich von 0,05mm bis 4mm. Die opaque Chromschicht 2 liegt typisch im Bereich von 20nm bis 1000nm, die Fluoreszenzschicht 3 im Bereich von 500nm bis 20000nm.

Die jeweiligen Schichten können mit bekannten Herstellungsverfahren einfach hergestellt werden, z.B. mittels Spin-Coating, Dip-Coating oder Spray-Coating mit Lösung; PVD-Verfahren wie Magnetron-Co-Sputtern, Lichtbogenverdampfen, Hochenergieimpulsmagnetronsputtern, thermisches oder Elektronenstrahlverdampfen; oder auch PECVD.

In den vorausgehend beschriebenen Ausführungsbeispielen wurde ein transparentes Substrat 1 verwendet, um das Laserlicht L durch das Substrat 1 auf die Fluoreszenzschicht 3 leiten zu können. Alternativ ist es auch möglich, ein opakes Substrat zu verwenden. Dann muss das Laserlicht L von der dem Substrat abgewandten Seite her eingestrahlt werden. Eine aus strukturiertem Chrom hergestellte Referenzstruktur muss dann zwischen der Fluoreszenzschicht 3 und der Laserlichtquelle angeordnet sein.

Beispielhaft seien noch einige Herstellungsprozesse für solche Kalibrierungstargets T angegeben:
- Aufspinprozess: 20ml Toluol werden mit 5Gew.% PMMA versetzt und bei 45°C für 5 Stunden gerührt. Tropfenweise wird 1ml Titan-Tetra-Isopropoxid (TTIP) zugegeben. 5ml der entstandenen Lösung werden bei 1500rpm für 30s auf einen Glaswafer aufgesponnen, der zuvor mittels reaktivem Ionenätzen (RIE) mit einer strukturierten Chromschicht versehen wurde. Der beschichtete Wafer wird zur Erzeugung fluoreszenter Kohlenstoffstrukturen bei 300°C für 5 Stunden getempert. Die Kalibrierungstargets T werden anschließend mittels Lasertrennen ausgeschnitten.
- Aufspinprozess: 20ml Toluol werden mit 1 ml Titan-Tetra-Isopropoxid (TTIP) tropfenweise verrührt. 5ml alkylamin-funktionalisiertes Graphenoxid in Toluol (z.B. Sigma Aldrich Art.Nr. 809055-50ML) werden mit der Lösung verrührt. 4ml der entstandenen Lösung werden bei 1000rpm für 30s auf einen Glaswafer (D263 bio) aufgesponnen, der zuvor mittels Liftoff-Prozess mit einer strukturierten Chromschicht versehen wurde. Der beschichtete Wafer wird zur Kristallisation der Matrix bei 250°C für 5 Stunden getempert. Die Kalibrierungstargets T werden anschließend mittels Trennsäge vereinzelt.
- PVD-Prozess: Ein 8" Quarzwafer wird mittels Sputterdeposition, Lithographie und RIE mit einer strukturierten Chromschicht versehen. Dieser wird in ein PVD-System mit zwei Magnetron-Sputter-Targets eingebracht und mittels Co-Sputtern von Ta2O5 und Graphit mit einer 10Gew.% Graphit-Ta2O5-Beschichtung mit einer Dicke von 200nm versehen. Nach dem Ausschleusen wird der Wafer mittels Laserperforation und Brechen vereinzelt.
- PACVD-Prozess: Ein 8" Glaswafer wird mittels E-Beam-Verdampfen und Lithographie mit einer strukturierten Titanschicht versehen. Dieser wird in ein PACVD-System eingebracht und mittels RF-Plasmaentladung in Argon, Octadien und TTIP mit einer 20 prozentigen C / TiO2 -Beschichtung versehen. Der Wafer wird im Anschluss zur Kristallisation der Matrix in einem Ofen bei 320 °C für 3 Stunden getempert. Nach der Entnahme wird der Wafer mittels Lasertrennen vereinzelt.

## Patentansprüche

1. Verwendung eines Kalibrierungstargets zum Kalibrieren einer optoelektronischen Vorrichtung zur Analyse von Biomolekülen durch Detektion von Fluoreszenzsignalen aus einer Probe, wobei das Kalibrierungstarget eine auf einem Substrat (1) angeordnete, durch Laserlicht (L) anregbare, feste Fluoreszenzschicht (3) aufweist, wobei die Fluoreszenzschicht (3) eine optisch inaktive, transparente Matrix mit einem Brechungsindex größer als 2 bei einer Wellenlänge von 510 nm aufweist, wobei die Matrix eine kolloidale Struktur umfassend Titandioxid oder Tantalpentoxid sowie eine darin eingebettete, auf Kohlenstoff basierte und zur Lichtemission anregbare Komponente aufweist, wobei die auf Kohlenstoff basierte Komponente Graphen, Graphenoxid oder reduziertes Graphenoxid ist.

2. Verwendung eines Kalibrierungstargets nach Anspruch 1, **dadurch gekennzeichnet, dass** das Substrat (1) ein Glas ist.

3. Verwendung eines Kalibrierungstargets nach einem der vorhergehenden Ansprüche, **dadurch gekennzeichnet, dass** die Fluoreszenzschicht (3) vollständig aus anorganischen Bestandteilen zusammengesetzt ist.

4. Verwendung eines Kalibrierungstargets nach einem der vorhergehenden Ansprüche, **dadurch gekennzeichnet, dass** eine strukturierte, opaque Schicht (2) die Fluoreszenzschicht (3) teilweise gegen das Laserlicht (L) abschirmt und so eine Referenzstruktur formt.

5. Verwendung eines Kalibrierungstargets nach Anspruch 4, **dadurch gekennzeichnet, dass** die opaque Schicht (2) aus Chrom besteht.

6. Verwendung eines Kalibrierungstargets nach einem der Ansprüche 1 - 3, **dadurch gekennzeichnet, dass** zur Bildung einer Referenzstruktur die Fluoreszenzschicht (3) strukturiert ist.

7. Verwendung eines Kalibrierungstargets nach einem der vorhergehenden Ansprüche, **dadurch gekennzeichnet, dass** der Anteil der zur Lichtemission anregbaren Komponente an der Fluoreszenzschicht (3) zwischen 1 und 50 Gewichtsprozent, bevorzugt zwischen 5 und 20 Gewichtsprozent liegt.

## Claims

1. Use of a calibration target for calibrating an optoelectronic device for analysis of biomolecules by detecting fluorescence signals from a sample, wherein the calibration target has a solid fluorescence layer (3) which is disposed on a substrate (1) and is excitable by laser light (L), wherein the fluorescence layer (3) has an optically inactive transparent matrix having a refractive index greater than 2 at a wavelength of 510 nm, wherein the matrix has a colloidal structure comprising titanium dioxide or tantalum pentoxide and a carbon-based component embedded therein which is excitable for emission of light, wherein the carbon-based component is graphene, graphene oxide or reduced graphene oxide.

2. Use of a calibration target according to Claim 1, **characterized in that** the substrate (1) is a glass.

3. Use of a calibration target according to either of the preceding claims, **characterized in that** the fluorescence layer (3) is composed entirely of inorganic components.

4. Use of a calibration target according to any of the preceding claims, **characterized in that** a structured opaque layer (2) partly shields the fluorescence layer (3) from the laser light (L) and thus forms a reference structure.

5. Use of a calibration target according to Claim 4, **characterized in that** the opaque layer (2) consists of chromium.

6. Use of a calibration target according to any of Claims 1-3, **characterized in that** a reference structure is formed by structuring of the fluorescence layer (3).

7. Use of a calibration target according to any of the preceding claims, **characterized in that** the proportion of the component excitable for emission of light in the fluorescence layer (3) is between 1 and 50 per cent by weight, preferably between 5 and 20 per cent by weight.

## Revendications

1. Utilisation d'une cible d'étalonnage destinée à étalonner un dispositif optoélectronique pour l'analyse de biomolécules par détection de signaux de fluorescence provenant d'un échantillon, la cible d'étalonnage présentant une couche de fluorescence (3) solide, agencée sur un substrat (1), excitable par une lumière laser (L), la couche de fluorescence (3) présentant une matrice transparente optiquement inactive d'un indice de réfraction supérieur à 2 à une longueur d'onde de 510 nm, la matrice présentant une structure colloïdale comprenant du dioxyde de titane ou du pentoxyde de tantale ainsi qu'un constituant incorporé dans celle-ci, à base de carbone et excitable en émission de lumière, le constituant à base de carbone étant du graphène, de l'oxyde de graphène ou de l'oxyde de graphène réduit.

2. Utilisation d'une cible d'étalonnage selon la revendication 1, **caractérisée en ce que** le substrat (1) est un verre.

3. Utilisation d'une cible d'étalonnage selon l'une des revendications précédentes, **caractérisée en ce que** la couche de fluorescence (3) est totalement composée de constituants inorganiques.

4. Utilisation d'une cible d'étalonnage selon l'une des revendications précédentes, **caractérisée en ce qu'**une couche (2) opaque structurée protège la couche de fluorescence (3) en partie contre la lumière laser (L) et forme ainsi une structure de référence.

5. Utilisation d'une cible d'étalonnage selon la revendication 4, **caractérisée en ce que** la couche (2) opaque est constituée de chrome.

6. Utilisation d'une cible d'étalonnage selon l'une des revendications 1 à 3, **caractérisée en ce que** la couche de fluorescence (3) est structurée pour la formation d'une structure de référence.

7. Utilisation d'une cible d'étalonnage selon l'une des revendications précédentes, **caractérisée en ce que** la proportion de constituant excitable en émission de lumière par rapport à la couche de fluorescence (3) est située entre 1 et 50% en poids, de préférence entre 5 et 20% en poids.
